# EUROPÄISCHE PATENTANMELDUNG

(11) **EP 1 052 044 A1**
(43) Veröffentlichungstag der Anmeldung: **15.11.2000**
(21) Anmeldenummer: 99810411.1
(22) Anmeldetag: 09.05.1999
(51) Int. Cl.: B23B 31/08

(54) **Werkzeughalter**

(71) Anmelder: Amtru Business AG, 8542 Wiesendangen (CH)
(72) Erfinder: Ammann, Bruno, 8542 Wiesendangen (CH)
(74) Vertreter: Hammer, Bruno, Dr.

(57) **Zusammenfassung**

Der Werkzeughalter umfasst eine Vorrichtung zur Aufnahme eines Bearbeitungswerkzeugs. Diese Vorrichtung zum Aufnehmen von Bearbeitungswerkzeugen ist in einem Lager (23) gelagert, wobei diese Vorrichtung aus einer Ruhelage auslenkbar ist. Weiter ist eine Einrichtung zum Rückstellen der ausgelenkten, auslenkbaren Vorrichtung für die Aufnahme des Bearbeitungswerkzeugs in ihre Ruhelage vorhanden. Diese Vorrichtung zum Rückstellen umfasst einen in Längsrichtung des Werkzeughalters wirksamen Rückstellkolben (31), der mit einer mit der Vorrichtung zur Aufnahme des Bearbeitungswerkzeugs (2) verbundenen Stossfläche in Wirkverbindung. Weiter ist mindestens ein Federelement vorgesehen, das in Längsrichtung des Werkzeughalters auf den Rückstellkolben einwirkt.

## Beschreibung

Die Erfindung bezieht sich auf einen Werkzeughalter nach dem Oberbegriff des unabhängigen Anspruchs 1, sowie auf die Verwendung dieses Werkzeughalters.

Derartige Werkzeughalter werden beispielsweise beim Bearbeiten von Werkstücken, verwendet. Beim Entfernen von Graten, von sog. Primärgraten an gegossenen Werkstücken spricht man von Gussputzen. Beim Entfernen von Graten an Werkstücken, die beim Bearbeiten wie fräsen, drehen, bohren, sägen u.s.w. des Werkstücks entstanden sind, spricht man von Entgraten. Im Folgenden soll nicht mehr zwischen dem Entfernen von auf verschiedene Weise entstandenen Graten, sondern generell nur noch vom Entgraten gesprochen werden. Der Begriff, wie er in der vorliegenden Schrift verwendet wird, kann sowohl Gussputzen als auch Entgraten im engeren Sinne bedeuten.

Das maschinelle Entgraten erfolgt in der Regel so, dass das Werkstück in einer Haltevorrichtung eingespannt wird. Das Entgratwerkzeug wird mit einer numerisch gesteuerten Einrichtung entlang der zu bearbeitenden Bereiche des Werkstücks, meist entlang von Kanten geführt. Es spielt dabei keine Rolle, ob es sich bei der numerisch gesteuerte Einrichtung um eine sog. NC-Maschine oder um einen eigentlichen Roboter handelt. Als Entgratwerkzeuge verwendet man beispielsweise Fräswerkzeuge, Schleifwerkzeuge aber auch Polierwerkzeuge.

Beim Entgraten und ganz besonders beim Gussputzen müssen sowohl grosse Lageabweichungen der zu entgratenden Kanten, wie auch unterschiedliche Gratbildung kompensiert werden. Dies kann nur entweder durch genaues Ausmessen der entsprechenden Kanten oder indem man flexibel gelagerte Entgratwerkzeuge verwendet, geschehen. Damit wird erreicht, dass die Werkstücke nicht beschädigt werde, in dem beispielsweise zuviel Material abgetragen oder die Kontur des Werkstücks beschädigt würde. Es ist sofort einzusehen und ersichtlich, dass aus ihrer Ruhelage auslenkbar bzw. schwenkbar gelagerte und gehaltenen Werkzeuge vorzuziehen wären, weil diese gegenüber starr gehaltenen Werkzeugen einen wesentlich geringeren Einrichte- und Programmieraufwand erfordern.

Um aber den Entgratprozess effizient durchführen zu können und den Programmieraufwand niedrig zu halten, sollten diese Werkzeuge möglichst in alle Richtungen auslenkbar sein. Andernfalls müsste der Roboter oder das Handhabungsgerät bei einer Richtungsänderung die Orientierung des Entgratwerkzeugs auch ändern. Dabei verlängern sich die Prozesszeiten unnötigerweise.

Nach möglichst vielen, wenn möglich allen Richtungen auslenkbare Werkzeuge erlauben auch den Einsatz relativ einfacher Bearbeitungsmaschinen. Man kann beispielsweise eine relativ einfachere NC-Werkzeugmaschine an Stelle eines eigentlichen Roboters für den gleichen Arbeitsprozess einsetzen. In Fällen, wo auf den Roboter nicht verzichtet werden kann, soll der Programmieraufwand wie übrigens auch bei NC-Maschinen möglichst gering gehalten werden können.

Es ist eine Aufgabe der vorliegenden Erfindung einen Werkzeughalter mit auslenkbarer bzw. auschwenkbarer Aufnahme für die Werkzeuge zu schaffen, der im Aufbau einfach und robust ist und sowohl für die Verwendung mit numerisch gesteuerten Werkzeugmaschinen als auch mit Robotern geeignet ist. Darüber hinaus soll der Werkzeughalter in der meist doch rauhen Umgebung von beispielsweise mit grossen Fertigungstoleranzen gefertigten Werkstücken zuverlässig arbeiten.

Diese Aufgabe wird nach der Erfindung mit einem Werkzeughalter gelöst, der die Merkmale des kennzeichnenden Teils im unabhängigen Anspruch 1 aufweist. Die abhängigen Ansprüche beziehen sich auf vorteilhafte Ausführungsformen und Ausgestaltungen der Erfindung.

Mit dem Verwenden beispielsweise eines Rohrkolbens, der in Achsrichtung des Werkzeughalters bewegbar ist und pneumatisch angetrieben wird, ist es möglich, auf einfachste Weise die Rückstellkräfte für den Werkzeughalter auf verschiedene Werte einzustellen und auf dem jeweils gewählten und eingestellten Wert konstant zu halten. Ja es wird sogar möglich, in einem Arbeitsprozess die Rückstellkraft in Abhängigkeit vom gerade bearbeiteten Bereich des Werkstücks und/oder in Abhängigkeit vom Prozessschritt zu verändern, bzw. dem Prozessschritt anzupassen. Die Rückstellkräfte des Werkzeughalters bestimmen im wesentlichen Teil auch die Anpresskräfte und damit die Arbeitsweise des Werkzeugs.

In der unbelasteten Ruhelage haben die Achse der Vorrichtung für die Aufnahme des Werkzeugs, d.h. der Werkzeugaufnahme und die Achse des Werkzeughalters die gleiche Richtung. Wenn Querkräfte auf das Werkzeug wirken, was der Fall ist, wird dieses ausgelenkt bzw. ausgeschwenkt. Das Werkzeug arbeitet damit mit konstantem Anpressdruck, was zum angestrebten, gleichmässigen Arbeitsergebnis führt. In der Regel ist es ausreichend, wenn die Werkzeugaufnahme um maximal etwa 8 Grad bis 10 Grad geschwenkt, d.h. gegen über der Hauptachse des Werkzeughalters ausgelenkt werden kann.

Als Rückstellelement für den die Werkzeugaufnahme in die Ruhelage könnte auch eine Feder oder ein Elastomer wie z.B. Kautschuk verwendet werden. Eine Feder mit konstanter Federkraft über einen bestimmten Federweg wäre könnte für bestimmte Anwendungen der Werkzeugaufnahme besonders gut geeignet sein.

Für wieder andere Anwendungen kann es vorteilhaft sein, wenn die Rückstellkraft in Abhängigkeit von der Auslenkung, z.B. in Abhängigkeit vom Auslenkwinkel der Werkzeugaufnahme abnimmt oder insbesondere zunimmt. Es könnte für eine derartige Anwendung eine Feder mit vorgegebener Zunahme oder Abnahme der Federkraft vorgesehen sein. Bei einer pneumatisch arbeitenden Rückstellvorrichtung wäre entsprechend den Anforderungen und in Abhängigkeit von der Auslenkung der pneumatische Druck zu erhöhen oder zu verringern. Die Druckveränderung könnte mit einem Winkelsensor, der den Auslenkwinkel der Werkzeugaufnahme gegenüber der Achse des Werkzeughalters laufend gemessen werden. Mit diesem Messsignal könnte der Druck z.B. einer Druckluftquelle laufend gesteuert und/oder geregelt werden.

Beim Werkzeughalter nach der Erfindung kann die Werkzeugaufnahme mit einem Elektromotor für den Antrieb des Werkzeugs verbunden sein. In diesem Fall kann auch der Motor selbst, zusammen mit der Werkzeugaufnahme, schwenkbar im Werkzeughalter angeordnet sein. An Stelle des Elektromotors, kann auch eine mit einem Fluid, beispielsweise Luft oder Wasser angetriebener Motor geeignet sein.

Es kann aber auch nur die Werkzeugaufnahme, z.B. eine gelagerte Welle mit Spannfutter für das Werkzeug schwenkbar im Werkzeughalter angeordnet sein. Der Antrieb des Werkzeugs kann dann beispielsweise über eine flexible Welle vom Motor zur Werkzeugaufnahme erfolgen.

Die Erfindung wird anhand der Zeichnungen, welche ein Ausführungsbeispiele der Erfindung und Einzelheiten davon zeigen, näher erläutert.

Es zeigen:
- Fig. 1: einen Werkzeughalter, mit der Werkzeugaufnahme in Ruhelage in einem schematischen Längsschnitt;
- Fig. 2: in einer Vergrösserung Einzelheiten des Bereichs B1 von Fig. 1;
- Fig.3: in einem Längsschnitt den Werkzeughalter von Fig. 1 mit ausgelenkter, bzw. ausgeschwenkter Werkzeugaufnahme; anhand dieser Fig. 3 wird auch die Wirkungs- und Arbeitsweise des Werkzeughalters erläutert

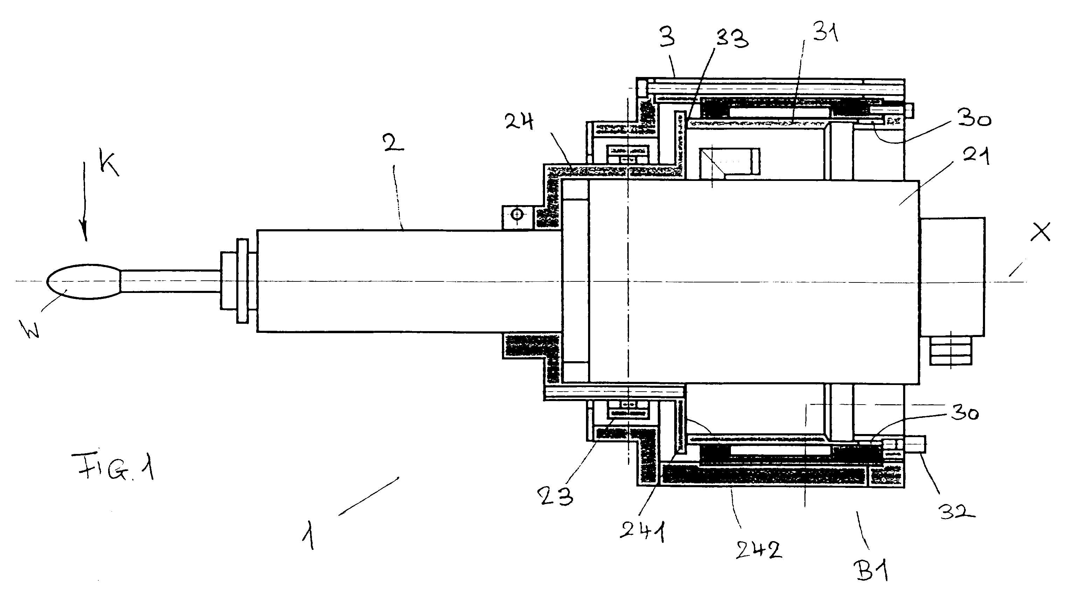

Der in Fig. 1 gezeigte Werkzeughalter 1 zeigt eine schwenkbare Werkzeugaufnahme 2, die an einem Motor 21 starr befestigt ist. Der Motor 21 mit der Werkzeugaufnahme 2 ist in einem Gehäuse 3 schwenkbar bzw. aus der Ruhelage auslenkbar gelagert. Als Auslenkeinrichtung ist im gezeigten Beispiel ein Kardanlager 23 vorgesehen. Es könnte aber auch ein Lager ähnlich einem Kugellager als Auslenkvorrichtung vorgesehen sein. Der Motor 21 ist in einem Rohrflansch 24 gefasst und das Kardangelenk bzw. Kardanlager 23 ist an diesem Rohflansch 24 befestigt. Die Befestigungselemente für das Kardanlager 23 am Motor 21 können auch durch den Rohrflansch 24, direkt zum Gehäuse des Motors 21 geführt und an diesem befestigt sein. Der Rohrflansch 24 weist einen Ring 241 mit der Stossfläche 242 auf. Der Ring 241 wird in der Fachsprache auch als Auslenkflansch oder als Rückstellflansch bezeichnet.

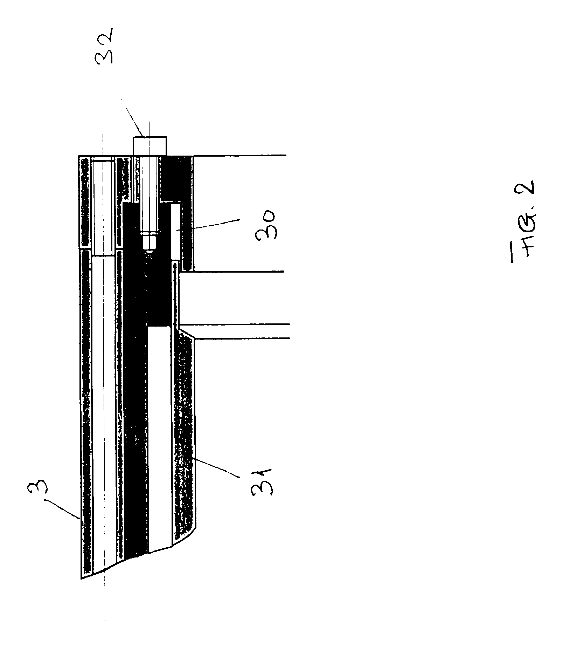

Im Gehäuse 3 mit der Längsachse X ist ein Rohrkolben 31, in Richtung der Längsachse X verschiebbar angeordnet. Einer Druckkammer 30 wird über eine Druckluftzufuhr 32 Druckluft von einer hier nicht gezeigten Druckluftquelle zugeführt. Dies kann sehr gut in Fig. 2 gesehen werden. Damit wird der Rohrkolben 31 immer gegen die Stossfläche 242 des Ringes 241 des Rohrflanschs 24 gedrückt. Der Fuss 33 des Rohrkolbens 31 liegt in der Ruhelage mit einer kreisförmigen Fläche auf der Stossfläche 242 des Rings 241 des Rohrflansches auf. Die Werkzeugaufnahme 2 wird somit mit dem Rohkolben 31 in der neutralen Lage gehalten, wo die Achse der Werkzeugaufnahme 2 mit der Achse X des Werkzeughalters 1 zusammenfällt oder zu dieser parallel ist.

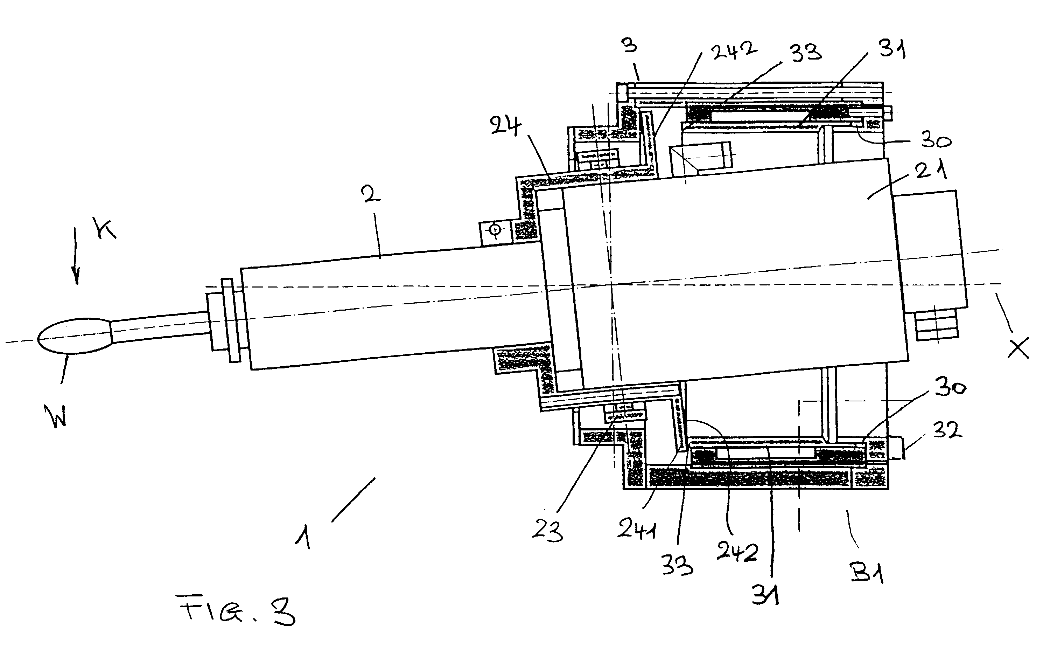

Wirkt nun eine Querkraft K (Pfeil) auf die Werkzeugaufnahme 2, bzw. auf ein in der Werkzeugaufnahme 2 im Spannfutter gehaltenen Werkzeug W, so wird die Werkzeugaufnahme 2 ausgelenkt, wie dies in Fig. 3 gezeigt ist. Beim Ausschwenken der Werkzeugaufnahme 2 mit dem Motor 21 wird der Rohkolben 31 zurückgeschoben. Der Fuss 33 des Rohkolbens 31 hebt von der kreisförmigen Berührungsfläche der Stossfläche 242 auf dem Ring 241 ab. Der Fuss 33 stösst nur noch mit einer kleinen Fläche (Berührungspunkt) gegen die Stossfläche 242. Wenn die Kraft K z.B. von der Kante bzw. einem Grat eines bearbeiteten Werkstücks auf das Werkzeug W ausgeübt wird folgt das Werkzeug der Kante.

Da das Werkzeug W mit der Werkzeugaufnahme 2 vom Rohkolben 31 in die Ruheposition zurückgedrängt wird, wird beispielsweise beim Entgraten vom Werkzeug W höchstens so lang und höchstens so viel Material abgetragen, bis die Werkzeugaufnahme 2 mit dem Werkzeug W sich wieder in der Ausgangslage befindet.

Um die Abnutzung des Fusses 33 des Rohkolbens 31 zu verringern kann der Fuss 33 gerundet sein, so dass der Fuss auf der Stossfläche 242 des Ringes 241 abrollt.

Es ist hier nicht gezeigt aber ohne weiteres einsehbar, dass der Werkzeughalter 2 mit dem Motor 21 und dem Werkzeug W in jeder Richtung ausgelenkt werden kann, dies abhängig davon, welche Richtung die Resultierende der Querkräfte K hat. Die Wirkungs- und Arbeitsweise des Werkzeughalters nach der Erfindung ist hier anhand einer Vorrichtung zu Entgraten beschrieben. Der Werkzeughalter ist selbstverständlich für manche andere Verwendung ebensogut geeignet.

Die Kraft K, die für das Auslenken der Werkzeugaufnahme 2 aus ihrer Ruhelage notwendig ist, kann mit dem Ändern der Rückstellkraft, also beispielsweise des Luftdrucks verändert werden. Prinzipiell könnten aber auch die Hebelverhältnisse im Werkzeughalter verändert werden. Massgebend sind für derartige Änderungen der Abstand des Werkzeugs W vom Drehpunkt des Schwenklagers 23 und der Abstand des Ringes 241 und damit der Stossfläche 242 vom Drehpunkt des Schwenklagers 23; die Abstände gemessen in Richtung der Längsachse der Werkzeugaufnahme 2.

Der Werkzeughalter umfasst eine Vorrichtung zur Aufnahme eines Bearbeitungswerkzeugs. Diese Vorrichtung zum Aufnehmen von Bearbeitungswerkzeugen ist in einem Lager gelagert, wobei diese Vorrichtung aus einer Ruhelage auslenkbar ist. Weiter ist eine Einrichtung zum Rückstellen der ausgelenkten, auslenkbaren Vorrichtung für die Aufnahme des Bearbeitungswerkzeugs in ihre Ruhelage vorhanden. Diese Vorrichtung zum Rückstellen umfasst einen in Längsrichtung des Werkzeughalters wirksamen Rückstellkolben, der mit einer mit der Vorrichtung zur Aufnahme des Bearbeitungswerkzeugs verbundenen Stossfläche in Wirkverbindung. Weiter ist mindestens ein Federelement vorgesehen, das in Längsrichtung des Werkzeughalters auf den Rückstellkolben einwirkt.

## Patentansprüche

1. Werkzeughalter (1) mit einer Vorrichtung (2) zur Aufnahme eines Bearbeitungswerkzeugs (W), welcher im Werkzeughalter (1) in einem Lager (23) gelagert ist, wobei diese Vorrichtung (2) zur Aufnahme des Werkzeugs (W) aus einer Ruhelage (X) auslenkbar ist, und mit einer Vorrichtung (241, 242; 31, 33) zum Rückstellen der ausgelenkten, auslenkbaren Vorrichtung (2) für die Aufnahme des Bearbeitungswerkzeugs (W) in ihre Ruhelage (X), dadurch gekennzeichnet, dass die Vorrichtung (241, 242; 31, 33) zum Rückstellen einen in Längsrichtung des Werkzeughalters wirksamen Rückstellkolben (31) umfasst, der mit einer, mit der Vorrichtung (2) zur Aufnahme des Bearbeitungswerkzeugs (W) verbundenen Stossfläche (242) in Wirkverbindung ist, und mit mindestens einem Federelement (30, 32) das in Längsrichtung (X) des Werkzeughalters (1) auf den Rückstellkolben (31) einwirkt.

2. Werkzeughalter (1) nach Anspruch 1, bei welchem der Rückstellkolben ein Rohrkolben (31) ist, der in Richtung (X) der Längsachse des Werkzeughalters (1) bewegbar ist, und auf welchen das mindestens eine Federelement (30, 32) wirkt, sowie mit einem ringartigen Flansch (241) an der Vorrichtung (2, 21) zur Aufnahme des Bearbeitungswerkzeugs (W), welcher eine Stossfläche (242) aufweist, mit welcher der Fuss (33) des Rohrkolbens (31) in Wirkverbindung ist.

3. Werkzeughalter (1) nach Anspruch 1 oder 2, bei welchem das Federelement, das auf den Rückstellkolben (31) wirkt, ein pneumatisches Fluid (30, 32), wie Luft, vorzugsweise Pressluft, eine Feder aus Metall, Kunststoff oder ein elastisches Material wie ein Elastomer ist.

4. Werkzeughalter (1) nach einem der Ansprüche 1 bis 4, bei welchem die Vorrichtung (1) zur Aufnahme des Werkzeugs (W) im Werkzeughalter (1) in einem Schwenklager (23) drehbar gelagert.

5. Werkzeughalter (1) nach Anspruch 4, bei welchem das Schwenklager ein kardanisches Lager (23), ein kugelartiges Lager oder ein Lager aus einem elastischen Material ist.

6. Werkzeughalter (1) nach einem der Ansprüche 1 bis 5, mit einem Antriebsmotor (21), vorzugsweise einem Elektromotor oder einem Luftmotor, für den Antrieb des Werkzeugs, der mit der Vorrichtung (2) zur Aufnahme des Werkzeugs (W) verbunden ist und das Werkzeug (W) antreibt.

7. Werkzeughalter (1) nach Anspruch 6, bei welchem der Antriebsmotor (21) und die Vorrichtung (2) zur Aufnahme des Werkzeugs (W) eine Einheit bilden, die im Werkzeughalter (1) schwenkbar gelagert ist.

8. Verwendung eines Werkzeughalters (1) nach einem der Ansprüche 1 bis 7 in einer Anlage zum Putzen von Gusstücken oder in einer Anlage zum Entgraten.
